# FASCICULE DE BREVET EUROPEEN

(11) **EP 3 314 727 B1**
(45) Date de publication et mention de la délivrance du brevet: **20.05.2020**
(21) Numéro de dépôt: 16733043.0
(22) Date de dépôt: 23.06.2016
(51) Int. Cl.: H02K 1/18, H02K 1/20, H02K 5/00, H02K 5/04, H02K 7/14, H02K 9/06, H02K 5/22

(54) **MACHINE ÉLECTRIQUE TOURNANTE**
ELEKTRISCHE DREHMASCHINE
ROTARY ELECTRIC MACHINE

(30) Priorité: 26.06.2015 FR 1555985
(43) Date de publication de la demande: 02.05.2018
(73) Titulaire: Moteurs Leroy-Somer, 16915 Angouleme Cedex 9 (FR)
(72) Inventeur: MCCLELLAND, Michael, 16430 Champniers (FR); DEAC, Ioan, 400261 Cluj Napoca (RO); COURAGE, Aurélien, 69700 Chassagny (FR); DUTEAU, Alexis, 16710 Saint-Yrieix Sur Charente (FR)
(74) Mandataire: Nony
(86) Numéro de dépôt international: PCT/EP2016/064581
(87) Numéro de publication internationale: WO 2016/207301

(56) Documents cités:
- WO-A2-2008/046171
- JP-A- 2013 162 608
- US-A- 4 912 350
- US-A1- 2007 013 241

## Description

La présente invention concerne les machines électriques tournantes comportant au stator un paquet de tôles magnétiques.

Les tôles forment classiquement des encoches recevant les spires des bobinages stator de la machine.

Pour faciliter le refroidissement de la machine, il est connu de former les tôles avec des ailettes ou canaux de refroidissement.

Par ailleurs, les machines peuvent être répertoriées en deux familles, à savoir les machines avec carcasse et les machines sans carcasse.

Dans la première catégorie, le paquet de tôles stator est reçu dans une carcasse. Dans la seconde, le paquet de tôles définit directement la surface extérieure de la machine.

La demande FR 2 927 736 et les brevets US 5 331 238 et US 7 633 194 divulguent des machines avec carcasse. Le paquet de tôles du stator peut comporter des sous-paquets munis d'ailettes, qui sont disposées en quinconce le long de la machine, de façon à créer des turbulences et accroître l'efficacité du refroidissement.

Des machines sans carcasse sont connues des publications WO 2007/002216, US 8 519 580, US 2005/0067905 et WO 2005/022718.

Ces machines utilisent le plus souvent une tôle de forme générale carrée.

Dans WO 2007/002216, le paquet de tôles stator est réalisé avec des ailettes. Dans US 8 519 580, JP 2013/162608, US 2007/013241, et US 4 912 350, le paquet de tôles est réalisé avec des canaux internes.

La carcasse représente un coût relativement important et crée une barrière thermique supplémentaire avec l'extérieur. Elle est toutefois nécessaire dans certaines machines pour fermer les canaux de fluide de refroidissement.

Une machine sans carcasse peut s'avérer moins coûteuse à fabriquer; néanmoins, les arêtes vives qui résultent du découpage des ailettes sur l'extérieur du paquet de tôles peuvent donner lieu à des blessures lors de la manutention du stator.

L'invention vise à remédier à une partie au moins des inconvénients des machines connues et à perfectionner encore les machines électriques et elle y parvient grâce à une machine électrique comportant un stator selon la revendication 1.

Dans des exemples préférés de mise en œuvre de l'invention, les tôles des premier et deuxième sous-paquets présentent des parties qui se superposent comportant chacune au moins un canal fermé formé au sein des tôles, les tôles étant identiques mais décalées angulairement entre elles d'un angle 360°/n autour de l'axe de la machine, avec n entier non nul, les tôles étant sans symétrie par une rotation de 360°/n de telle sorte que les parties des tôles ainsi décalées qui se superposent soient non identiques et créent ladite perturbation de l'écoulement à la transition entre les canaux des premier et deuxième sous-paquets.

L'invention permet de réaliser une machine sans carcasse sans les inconvénients des machines sans carcasse connues et avec une possibilité de refroidissement accrue.

En particulier, la perturbation de l'écoulement au sein des canaux à la transition entre les sous-paquets permet d'accroître l'échange thermique entre le paquet de tôles et le fluide de refroidissement par rapport à un passage droit qui n'induit que peu de turbulences.

Le refroidissement est donc amélioré par rapport à une machine sans carcasse dont les canaux sont droits du fait de l'emploi de tôles identiques superposées pour les réaliser.

De plus, l'invention permet de réduire, voire d'éliminer, du fait que les canaux sont fermés, la présence d'arêtes vives sur la surface extérieure du carter, et ainsi d'améliorer la sécurité en l'absence de carcasse ; l'invention n'est toutefois pas limitée à une machine sans carcasse, et l'on peut prévoir un carter autour du paquet de tôles ; ce carter peut être différent d'une carcasse réalisée par fonderie comme dans les machines de l'art antérieur, et peut être une simple tôle enroulée autour du paquet de tôles. Ce carter peut servir à personnaliser la machine, en étant de toute couleur et/ou en portant toute décoration souhaitée, par exemple un logo.

La machine peut être une machine fermée respectant la norme IP 55 ou une machine ouverte selon la norme IP 23.

L'invention permet un refroidissement amélioré et permet en outre si on le souhaite d'utiliser des canaux avec des formes qui ne sont pas bien adaptées à un montage dans une carcasse, contrairement à l'art antérieur ; l'invention permet d'éviter d'avoir à réaliser des pièces de fonderie de formes compliquées.

Au moins un canal présente en section transversale sur une partie au moins de sa longueur un contour fermé au sein du paquet; de préférence, cela vaut pour tous les canaux, ou à tout le moins la majorité d'entre eux. Lorsque les canaux sont fermés sur au moins une partie de leur longueur, la présence d'une pièce supplémentaire telle qu'une carcasse pour forcer le fluide de refroidissement à circuler dedans n'est plus nécessaire contrairement à l'art antérieur.

Par « canal fermé » il faut comprendre que le canal n'est pas ouvert radialement sur l'extérieur sur une partie au moins de sa longueur. Cette fermeture peut s'effectuer grâce à une paroi réalisée lors du découpage des tôles. Cette paroi peut définir au moins une partie de la surface extérieure du paquet de tôles du stator.

Le contour extérieur des tôles est non circulaire et chaque tôle présente des extensions angulaires, de préférence au nombre de n, parcourues par lesdits canaux.

Les tôles peuvent être sans symétrie par rapport à chacun de deux plans perpendiculaires entre eux et contenant l'axe de la machine, tout en ayant des extensions symétriques par rapport à l'axe de la machine.

Les tôles peuvent être de contour généralement polygonal, notamment carré. On a de préférence n égal à 4, mais d'autres valeurs sont possibles.

La machine peut comporter une alternance d'au moins quatre sous-paquets, avec une rotation d'un sous-paquet à l'autre, notamment de 90°.

Les tôles peuvent comporter au moins une encoche de repérage externe permettant de vérifier l'orientation de chaque sous-paquet au sein du paquet.

Le décalage entre les cloisons qui créée le décrochement peut être plus ou moins grand, et de préférence, il est d'au moins 1 mm. Dans une variante, l'une au moins des cloisons d'un sous-paquet se positionne entre deux cloisons du sous-paquet adjacent, de sorte qu'un canal parcourant un sous-paquet débouche dans deux canaux du sous-paquet adjacent.

Les perturbations de l'écoulement peuvent être obtenues par l'agencement des cloisons qui séparent les canaux, comme mentionné ci-dessus ; en variante, ou en outre, ces perturbations sont obtenues en jouant sur la position radiale du bord de la partie annulaire des tôles délimitant radialement vers l'intérieur les canaux.

Dans une variante encore, les perturbations sont créées en jouant sur le positionnement de parois qui ferment extérieurement les canaux ; cela peut permettre de créer des décrochements perturbant l'écoulement à la fois au sein des canaux ainsi qu'à l'extérieur du paquet de tôles, le long de celui-ci.

Chaque extension peut comporter une partie centrale et de part et d'autre de cette partie centrale des cloisons espacées entre elles, reliées à leur base à la partie centrale annulaire de la tôle et reliées à leur périphérie à la paroi extérieure qui ferme les canaux. Cette dernière peut s'étendre dans le prolongement des côtés de la tôle.

Chaque sous-paquet comporte par exemple entre 35 et 140 tôles. De préférence, au sein du paquet, les tôles sont toutes identiques, à la rotation près entre les sous-paquets. Chaque tôle peut être monolithique ou formée de secteurs assemblés.

Le paquet de tôles peut comporter des trous débouchant latéralement par un passage vers l'extérieur, des tirants étant engagés dans ces trous et soudés aux tôles via lesdits passages, les trous étant de préférence situés dans lesdites extensions, et mieux dans les parties centrales de celles-ci.

La machine peut être sans carter. En variante, elle comporte un carter recouvrant au moins partiellement le paquet de tôles, notamment un carter en tôle.

Un tel carter peut servir d'habillage et guider le fluide de refroidissement sur l'extérieur du paquet de tôles, et ainsi améliorer encore davantage l'efficacité du refroidissement.

La machine peut être montée ou non en porte-à-faux sur un organe à entraîner ou entraîneur, notamment un compresseur à air, comme divulgué dans le brevet US 7 573 165 notamment.

La machine peut comporter un flasque avant adjacent à l'organe à entraîner ou entraîneur, pourvu de pattes de support, et un flasque arrière dépourvu de pattes de support.

En variante, la machine comporte des flasques avant et arrière chacun munis de pattes de support.

Le refroidissement de la machine peut s'effectuer avec un ventilateur entraîné par l'arbre de la machine ou avec un moto-ventilateur indépendant, rapporté sur le paquet de tôles ou sur un flasque de la machine.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente de façon schématique en perspective un paquet de tôles selon l'invention,
- la figure 2 est une vue de face du paquet de tôles de la figure 1,
- la figure 3 est une vue de côté du paquet,
- la figure 4 est une coupe d'une extension du paquet de tôles selon IV-IV de la figure 2,
- la figure 5 représente isolément une tôle,
- la figure 6 représente un détail de la figure 2,
- la figure 7 est une vue analogue à la figure 6 d'une variante de réalisation,
- la figure 8 représente en perspective, de façon schématique, l'agencement des tôles de l'exemple de la figure 7,
- la figure 9 est une vue analogue à la figure 6 d'une autre variante de réalisation,
- les figures 10 à 13 représentent des exemples de machines selon l'invention, et
- les figures 14 et 15 représentent une autre variante de machine, en cours d'assemblage.

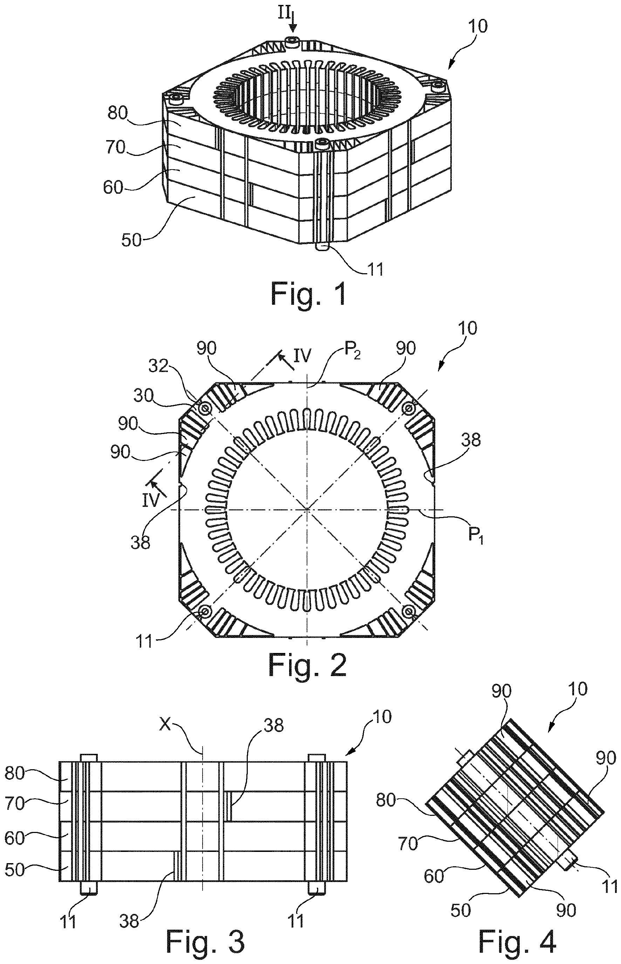

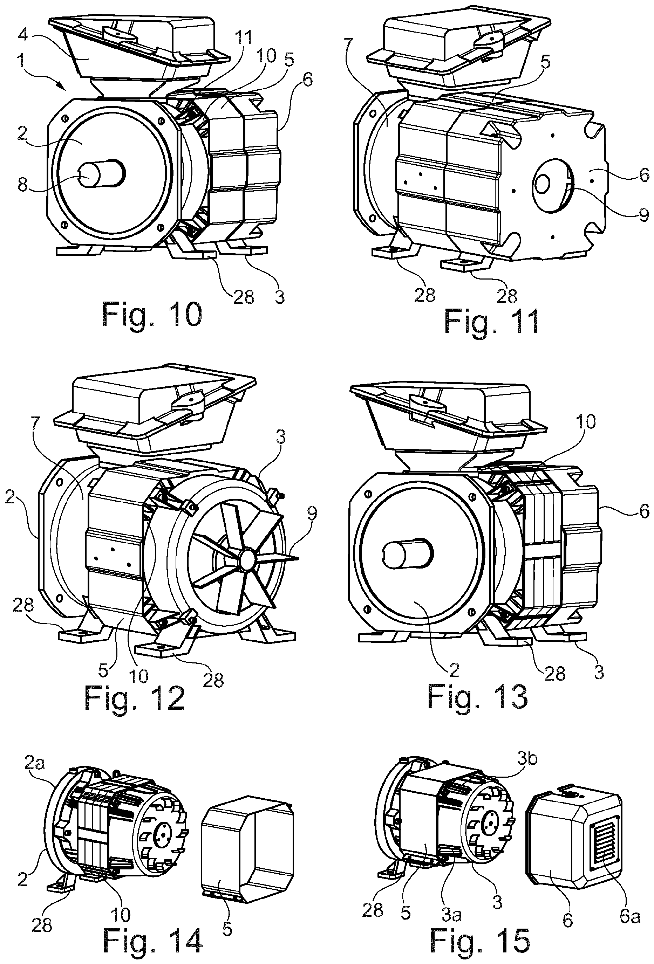

On a représenté sur les figures 1 à 4 un exemple de paquet de tôles de stator 10 d'une machine électrique tournante conforme à l'invention. Il peut s'agir d'un moteur ou d'un alternateur, synchrone ou asynchrone, à aimants permanents ou non. Un exemple de machine complète 1 est représenté sur les figures 10 à 12

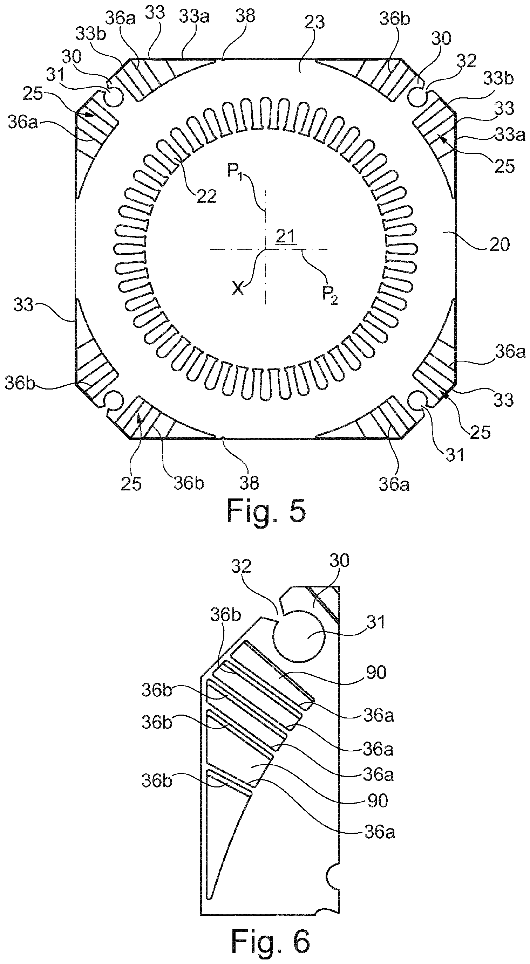

Le paquet 10 comporte un assemblage de tôles magnétiques 20 superposées, dont l'une d'elles est représentée isolément en vue de face à la figure 5.

Chaque tôle 20 est réalisée par exemple en acier magnétique recouvert d'un vernis isolant électrique sur ses faces opposées, de façon connue en soi.

Dans l'exemple considéré, la machine est à rotor intérieur et chaque tôle 20 comporte une ouverture centrale 21 pour le passage du rotor, dans laquelle débouchent des encoches 22 découpées dans la tôle, destinées à recevoir les conducteurs électriques des bobinages du stator.

La tôle 20 présente une partie annulaire continue 23 en arrière des encoches, et des extensions 25 dans les quatre coins, le contour extérieur étant généralement de forme carrée avec des angles tronqués au niveau des extensions 25.

Les extensions 25 présentent chacune, comme on peut le voir notamment sur la figure 5, une partie centrale 30 traversée par un trou 31 ouvert radialement vers l'extérieur au niveau d'un passage 32 , des parois extérieures 33 définissant le contour extérieur de l'extension 25 de part et d'autre de la partie centrale 30, et des cloisons 36a et 36b reliant chaque paroi extérieure 33 à la partie annulaire 23. Le montage du paquet de tôles stator est assuré par l'insertion de quatre tirants en acier 11 dans les trous 31, qui sont ensuite soudés tout le long du passage 32.

Les cloisons 36a se situent au niveau de deux extensions 25 diamétralement opposées, et les cloisons 36b au niveau des deux autres extensions 25. Les cloisons 36a et 36b sont non symétriques entre elles relativement à des plans P1 et P2 contenant l'axe X et perpendiculaires entre eux et aux côtés du paquet de tôles.

Les cloisons 36a et 36b n'étant pas symétriques, il existe un décalage entre celles-ci lorsque l'on superpose deux tôles 20 avec un décalage de 90° entre elles. Les tôles 20 se superposent exactement lorsque ce décalage passe à 180°.

Chaque paroi extérieure 33 présente une première portion 33a qui s'étend dans le prolongement d'un côté correspondant de la tôle entre les extensions 25 et une deuxième portion 33b qui forme un coude avec la première 33a et définit le bord tronqué du coin de la tôle.

Des encoches de repérage 38 sont réalisées sur deux côtés opposés de chaque tôle 20 de façon à renseigner sur l'orientation de celle-ci au sein du paquet. Ces encoches 38 sont symétriques l'une de l'autre par rapport au plan P2.

La tôle 20 est de préférence fabriquée de façon monolithique par découpe d'un feuillard avec sa forme définitive, mais en variante le paquet 10 est formé en enroulant sur lui-même un chapelet de secteurs ou par assemblage de secteurs (constituant chacun 1/4 ou 1/8 d'une tôle complète) pour les très grosses machines. L'utilisation d'une tôlerie à secteurs est avantageuse pour ce type de machine électrique.

Les tirants 11 servent éventuellement à assembler le paquet 10 avec des flasques avant et arrière de la machine.

Les tôles 20 peuvent être également assemblées entre elles par agrafage, de façon connue en soi.

Conformément à l'invention, le paquet 10 est formé de sous-paquets 50, 60, 70 et 80 qui se succèdent selon l'axe X du stator.

Ces sous-paquets 50 à 80 sont formés chacun d'une pluralité de tôles 20 identiques superposées. Les sous-paquets 50 à 80 diffèrent entre eux par l'orientation des tôles 20 d'un sous-paquet à l'autre ; au sein de chaque sous-paquet, l'orientation des tôles est la même.

Plus particulièrement, dans l'exemple considéré, les tôles 20 sont disposées d'un sous-paquet à l'autre avec une rotation de 90° autour de l'axe X. Ainsi, entre deux sous-paquets consécutifs, les cloisons 36a se superposent partiellement aux cloisons 36b, comme visible sur la figure 6.

Les cloisons 36a et 36b délimitent au sein de chaque sous-paquet des canaux 90 dans lesquels peut circuler un fluide participant au refroidissement du stator, par exemple de l'air.

Le décalage entre les cloisons 36a et 36b à l'interface entre les sous-paquets forme une discontinuité de la surface intérieure des canaux 90 qui tend à perturber l'écoulement en son sein du fluide de refroidissement, en le rendant plus turbulent. Il en résulte un échange thermique amélioré entre le fluide et le paquet de tôles et un meilleur refroidissement de la machine.

Dans l'exemple des figures 1 à 6, les parois extérieures 33 sont symétriques par rapport aux plans P1 et P2, de sorte que la succession des sous-paquets ne crée pas de décrochements sur la surface extérieure du stator.

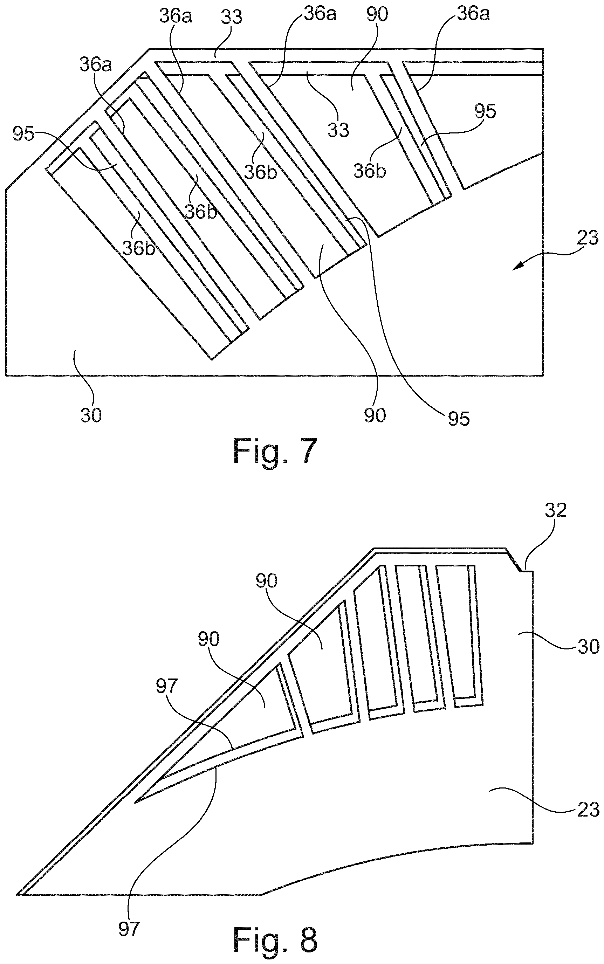

Dans la variante de la figure 7, le décalage entre les cloisons 36a et 36b est plus prononcé, de sorte que les cloisons 36a et 36b ne se superposent pas au sein du paquet mais ménagent en projection selon l'axe X des passages intermédiaires 95. Le décalage entre les cloisons 36a et 36b induit comme dans l'exemple des figures 1 à 6 des turbulences lors de la traversée des extensions par le fluide de refroidissement.

On a illustré également sur l'exemple de la figure 7 la possibilité de décaler les parois extérieures 33 d'un sous-paquet à l'autre ; les extensions 25 sont alors réalisées avec une dissymétrie non seulement au niveau des cloisons 36a et 36b mais également au niveau des parois extérieures 33.

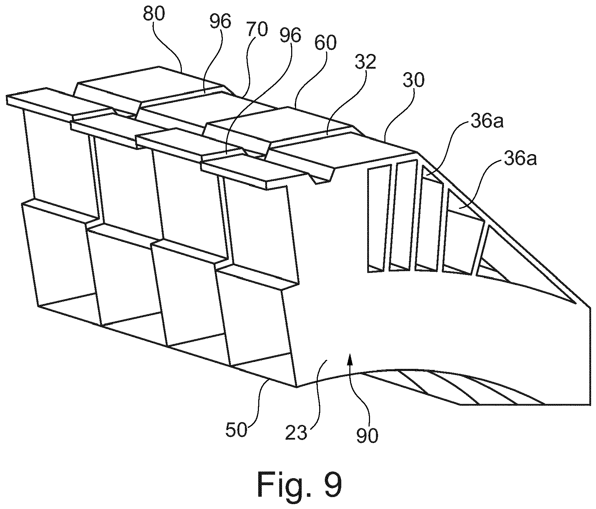

La variante des figures 8 et 9 correspond également à un tel décalage des parois extérieures 33, et l'on voit sur la figure 9 les décrochements correspondants 96 induits par ce décalage sur la surface extérieure du paquet de tôles du stator.

Dans l'exemple des figures 8 et 9, le décalage entre les cloisons 36a et 36b est moins prononcé que dans l'exemple de la figure 7, de sorte que les cloisons 36a et 36b sont décalées mais toujours légèrement superposées entre elles.

On voit sur la figure 8 que l'on peut également créer un décalage radial du bord radialement extérieur 97 de la partie annulaire au niveau des extensions, d'un sous-paquet à l'autre, de façon à créer des décrochements également à ce niveau.

Ainsi, dans ce cas, on peut trouver des canaux pour lesquels les quatre côtés qui les délimitent présentent chacun des décrochements à la transition entre deux sous-paquets consécutifs.

On voit sur la figure 1 que le paquet de tôles ne présente pas d'ailettes de refroidissement saillantes qui obligeraient à des précautions particulières lors de la manutention du stator, contrairement à certains stators de l'art antérieur, grâce au caractère fermé des canaux formés entre les cloisons 36a et 36b.

Toutefois, on ne sort pas du cadre de la présente invention si certains canaux sont quand même ouverts vers l'extérieur.

Le machine 1 représentée sur les figures 10 à 12 comporte le paquet de tôles 10 selon l'invention, sur lequel sont fixés les flasques avant 2 et arrière 3, par boulonnage à l'aide des tirants. Le flasque avant peut porter la boîte à bornes 4.

Le paquet de tôles 10 peut être recouvert par un carter 5 qui s'inscrit par exemple dans la continuité de la surface extérieure d'un capot arrière 6 porté par le flasque arrière 3. Les canaux ménagés entre les cloisons 36a et 36b débouchent axialement à l'extérieur de la machine, le long d'une paroi cylindrique 7 du flasque avant 2.

Le capot arrière 6 peut loger un ventilateur 7 entraîné en rotation par l'arbre 8 de la machine, de façon à ce que les canaux soient parcourus par une circulation d'air forcée durant le fonctionnement de la machine. Il est également possible de monter un moto-ventilateur à l'intérieur du capot 6 afin d'assurer le refroidissement sur toute la plage de fonctionnement.

Sur la figure 12, le capot arrière 6 n'a pas été représenté et seul le carter 5 recouvrant le paquet de tôles 10 est visible. Dans la variante de la figure 13, le carter 5 est absent, seul le capot arrière 6 étant présent.

Dans les exemples des figures 10 à 13, les flasques avant et arrière sont munis chacun de pattes de support 28.

Dans la variante illustrée sur les figures 14 et 15, la machine est destinée à un montage en porte-à-faux, par exemple comme décrit dans le brevet US 7 573 165, et le flasque arrière 3 ne comporte plus les pattes de support 28 La machine peut recevoir, fixé sur le flasque arrière, un moto-ventilateur disposé dans un capot 6.

Bien entendu, l'invention n'est pas limitée aux exemples qui viennent d'être décrits.

En particulier, la forme générale du paquet de tôles peut changer, et chaque tôle présente par exemple une forme hexagonale plutôt que carrée.

## Revendications

1. Machine électrique (1) comportant un stator, ce stator comportant un paquet (10) de tôles magnétiques (20) composé d'au moins un premier sous-paquet (50) et d'au moins un deuxième sous-paquet (60) adjacent au premier, les tôles des premier et deuxième sous-paquets ayant des parties (25) qui se superposent comportant chacune au moins un canal fermé (90) formé au sein des tôles, ces canaux (90) communiquant l'un avec l'autre à la transition entre les sous-paquets, les parties (25) des tôles qui se superposent étant non identiques de façon à créer une perturbation de l'écoulement au sein des canaux (90) à la transition entre les canaux des premier et deuxième sous-paquets, machine électrique dans laquelle les tôles (20) sont réalisées de telle sorte qu'à la transition entre deux sous-paquets, au moins une cloison (36a) séparant deux canaux adjacents d'un sous-paquet se superpose non exactement à une cloison (36b) correspondante de l'autre sous-paquet, de sorte à créer un décrochement à l'interface entre les sous-paquets, dans un canal (90) adjacent aux cloisons qui se superposent, et
en ce que chaque tôle présente des extensions angulaires (25) parcourues par lesdits canaux (90), au moins deux canaux (90) étant séparés au sein de chaque extension angulaire (25) par des cloisons (36a, 36b) orientées radialement.

2. Machine selon la revendication 1, les tôles (20) des sous-paquets étant identiques mais décalées angulairement entre elles d'un sous-paquet à l'autre d'un angle 360°/n autour de l'axe (X) de la machine, avec n entier non nul, les tôles (20) étant sans symétrie par une rotation de 360°/n de telle sorte que les parties (25) des tôles ainsi décalées qui se superposent soient non identiques et créent ladite perturbation de l'écoulement à la transition entre les sous-paquets (50,60) au sein des canaux (90).

3. Machine selon l'une des revendications 1 et 2, les extensions angulaires (25) de chaque tôle (20) étant au nombre de n.

4. Machine selon l'une quelconque des revendications précédentes, chaque tôle (20) comportant deux parois extérieures (33) fermant lesdits canaux (90) et décalées radialement, ces parois (33) créant une perturbation de l'écoulement à la transition entre les sous-paquets.

5. Machine selon l'une quelconque des revendications précédentes, chaque tôle (20) comportant une partie annulaire (23), avec deux bords (97) de ladite partie décalés radialement, ces bords (97) créant une perturbation de l'écoulement dans les canaux (90) à la transition entre les deux sous-paquets.

6. Machine selon l'une quelconque des revendications précédentes, le décalage entre les cloisons qui créée le décrochement étant d'au moins 1mm.

7. Machine selon l'une quelconque des revendications précédentes, les tôles (20) étant de contour généralement polygonal, notamment carré, de préférence carré à coins tronqués.

8. Machine selon l'une quelconque des revendications précédentes, avec n égal à 4.

9. Machine selon l'une quelconque des revendications précédentes, comportant une alternance d'au moins deux premiers sous-paquets et deux seconds sous-paquets, de préférence avec une rotation de 360°/n d'un sous paquet au suivant le long du paquet de tôles.

10. Machine selon l'une quelconque des revendications précédentes, les tôles comportant au moins une encoche (38) de repérage externe, renseignant sur l'orientation de chaque sous-paquet au sein du paquet (10).

11. Machine selon l'une quelconque des revendications précédentes, le paquet de tôles comportant des trous (31) débouchant par un passage (32) latéralement vers l'extérieur, des tirants (11) étant engagés dans ces trous (31) et soudés aux tôles via lesdits passages (32), les trous étant de préférence situés dans lesdites parties (25), et de préférence chaque trou est situé au sein d'une partie centrale (30) de celles-ci.

12. Machine selon l'une quelconque des revendications précédentes, étant sans carter autour du paquet (10) de tôles.

## Patentansprüche

1. Elektrische Maschine (1), die einen Stator umfasst, wobei dieser Stator ein Paket (10) Magnetbleche (20) umfasst, das aus mindestens einem ersten Teilpaket (50) und mindestens einem zu dem ersten benachbarten zweiten Teilpaket (60) besteht, wobei die Bleche der ersten und zweiten Teilpakete sich überlagernde Bereiche (25) besitzen, die jeweils mindestens einen in den Blechen gebildeten geschlossenen Kanal (90) umfassen, wobei diese Kanäle (90) am Übergang zwischen den Teilpaketen miteinander in Verbindung stehen, wobei die sich überlagernden Bereiche (25) der Bleche nicht identisch sind, so dass eine Störung der Strömung in den Kanälen (90) am Übergang zwischen den Kanälen der ersten und zweiten Teilpakete erzeugt wird, wobei in der elektrischen Maschine die Bleche (20) derart ausgeführt sind, dass am Übergang zwischen zwei Teilpaketen mindestens eine Trennwand (36a), die zwei benachbarte Kanäle eines Teilpakets trennt, nicht genau einer entsprechenden Trennwand (36b) des anderen Teilpakets überlagert ist, so dass ein Absatz an der Grenzfläche zwischen den Teilpaketen in einem zu den sich überlagernden Trennwänden benachbarten Kanal (90) erzeugt wird, und dass jedes Blech winklige Erweiterungen (25) aufweist, die von den Kanälen (90) durchlaufen werden, wobei mindestens zwei Kanäle (90) in jeder winkligen Erweiterung (25) durch radial ausgerichtete Trennwände (36a, 36b) getrennt sind.

2. Maschine nach Anspruch 1, wobei die Bleche (20) der Teilpakete identisch sind, aber winklig untereinander von einem Teilpaket zum anderen um einen Winkel 360°/n um die Achse (X) der Maschine herum versetzt sind, wobei n eine ganze Zahl ungleich null ist, wobei die Bleche (20) durch eine Drehung um 360°/n ohne Symmetrie sind, so dass die Bereiche (25) der so versetzten Bleche, die sich überlagern, nicht identisch sind und die Störung der Strömung am Übergang zwischen den Teilpaketen (50, 60) in den Kanälen (90) erzeugen.

3. Maschine nach einem der Ansprüche 1 und 2, wobei die Anzahl der winkligen Erweiterungen (25) jedes Blechs (20) n beträgt.

4. Maschine nach einem der vorhergehenden Ansprüche, wobei jedes Blech (20) zwei Außenwände (33) umfasst, welche die Kanäle (90) abschließen und radial versetzt sind, wobei diese Wände (33) eine Störung der Strömung am Übergang zwischen den Teilpaketen erzeugen.

5. Maschine nach einem der vorhergehenden Ansprüche, wobei jedes Blech (20) einen ringförmigen Bereich (23) mit zwei radial versetzten Rändern (97) dieses Bereichs umfasst, wobei die Ränder (97) eine Störung der Strömung in den Kanälen (90) am Übergang zwischen den beiden Teilpaketen erzeugen.

6. Maschine nach einem der vorhergehenden Ansprüche, wobei der Versatz zwischen den Trennwänden, der den Absatz erzeugt, mindestens 1 mm beträgt.

7. Maschine nach einem der vorhergehenden Ansprüche, wobei die Bleche (20) eine im Allgemeinen polygonale, insbesondere quadratische, bevorzugt quadratische Kontur mit gekappten Ecken haben.

8. Maschine nach einem der vorhergehenden Ansprüche mit n gleich 4.

9. Maschine nach einem der vorhergehenden Ansprüche, die eine Wechselfolge von mindestens zwei ersten Teilpaketen und zwei zweiten Teilpaketen umfasst, bevorzugt mit einer Drehung um 360°/n von einem Teilpaket zum nächsten entlang des Blechpakets.

10. Maschine nach einem der vorhergehenden Ansprüche, wobei die Bleche mindestens eine äußere Markierungskerbe (38) beinhalten, die Auskunft über die Ausrichtung jedes Teilpakets in dem Paket (10) gibt.

11. Maschine nach einem der vorhergehenden Ansprüche, wobei das Blechpaket Löcher (31) umfasst, die mit einem Durchlass (32) seitlich nach außen münden, wobei Zugstäbe (11) in diese Löcher (31) eingeführt sind und über die Durchlässe (32) an die Bleche geschweißt sind, wobei die Löcher bevorzugt in den Bereichen (25) gelegen sind und bevorzugt jedes Loch innerhalb eines zentralen Bereichs (30) von diesen gelegen ist.

12. Maschine nach einem der vorhergehenden Ansprüche ohne ein Gehäuse um das Blechpaket (10) herum.

## Claims

1. Electric machine (1) comprising a stator, this stator comprising a set (10) of magnetic laminations (20) which is made up of at least one first subset (50) and of at least one second subset (60) adjacent to the first the laminations of the first and second subsets having parts (25) which become superposed, each comprising at least one closed channel (90) formed within the laminations, these channels (90) communicating with one another at the transition between the subsets, the parts (25) of the laminations that become superposed being nonidentical so as to create a perturbation in the flow within the channels (90) at the transition between the channels of the first and second subsets, electric machine wherein the laminations (20) are produced in such a way that, at the transition between two subsets, at least one partition (36a) separating two adjacent channels of one subset becomes superposed nonexactly with a corresponding partition (36b) of the other subset so as to create a discontinuity at the interface between the subsets, in a channel (90) adjacent to the partitions which are superposed, and
wherein each lamination has angular extensions (25) through which the said channels (90) pass, at least two channels (90) being separated within each angular extension (25) by oriented radially partitions (36a, 36b).

2. Machine according to Claim 1, the laminations (20) of the subsets being identical but angularly offset from one another from one subset to the other by an angle 360°/n about the axis (X) of the machine, where n is a non-zero integer, the laminations (20) being without symmetry in a rotation by 360°/n so that the parts (25) of the laminations thus offset which become superposed are nonidentical and create the said perturbation in the flow at the transition between the subsets (50, 60) within the channels (90).

3. Machine according to one of Claims 1 and 2, the angular extensions (25) of each lamination (20) being n in number.

4. Machine according to any one of the preceding claims, each lamination (20) comprising two exterior walls (33) closing the said channels (90) and offset radially, these walls (33) creating a perturbation in the flow at the transition between the subsets.

5. Machine according to any one of the preceding claims, each lamination (20) comprising an annular part (23) with two edges (97) of the said part offset radially, these edges (97) creating a perturbation in the flow in the channels (90) at the transition between the two subsets.

6. Machine according to any one of the preceding claims, the offset between the partitions which creates the discontinuity being at least 1 mm.

7. Machine according to any one of the preceding claims, the laminations (20) having a contour that is generally polygonal, notably square, preferably square with cut-off corners.

8. Machine according to any one of the preceding claims where n is equal to 4.

9. Machine according to any one of the preceding claims, comprising an alternation of at least two first subsets and two second subsets, preferably with a rotation by 360°/n from one subset to the next along the set of laminations.

10. Machine according to any one of the preceding claims, the laminations comprising at least one external identification slot (38) providing information as to the orientation of each subset within the set (10).

11. Machine according to any one of the preceding claims, the set of laminations comprising holes (31) opening via a passage (32) laterally towards the outside, through-bolts (11) being engaged in these holes (31) and welded to the laminations via the said passages (32), the holes preferably being situated in the said parts (25) and each hole preferably being situated within a central part (30) of the said parts.

12. Machine according to any one of the preceding claims, being without a casing around the set (10) of laminations.
